# EUROPEAN PATENT APPLICATION

(11) **EP 4 796 251 A1**
(43) Date of publication of application: **26.08.2026**
(21) Application number: 23961480.3
(22) Date of filing: 14.12.2023
(51) Int. Cl.: B23K 20/12

(54) **FRICTION STIR SPOT WELDING TOOL AND METHOD FOR USING SAME**

(71) Applicant: KAWASAKI JUKOGYO KABUSHIKI KAISHA, Kobe-shi, Hyogo 650-8670 (JP)
(72) Inventor: TAKEOKA, Naoki, Kobe-shi, Hyogo 650-8670 (JP); YOSHIKAWA, Shuhei, Kobe-shi, Hyogo 650-8670 (JP); HATANO, Ryoichi, Kobe-shi, Hyogo 650-8670 (JP); EDAGAWA, Tadahiro, Kobe-shi, Hyogo 650-8670 (JP)
(74) Representative: Müller-Boré & Partner Patentanwälte PartG mbB
(86) International application number: PCT/JP2023/044808
(87) International publication number: WO 2025/126415

(57) **Abstract**

Provided is a friction stir spot welding tool that prevents leakage of an oil agent from a base of the tool even in a state where an axis of the tool is inclined from a vertical direction. A tool 1 includes: a pin 11; and a shoulder 12 into which the pin 11 is inserted. The pin 11 is inserted into a hollow part 12B of the shoulder 12 in a state where a pin distal end part 111 is inserted into a shoulder distal end part 121 and a pin base part 112 is inserted into a shoulder base part 122. As a result, a gap C is formed between an outer peripheral surface of the pin 11 and an inner peripheral surface of the shoulder 12. A base side surface roughness that is a value obtained by expressing a surface roughness of at least one of an outer peripheral surface 112a of the pin base part 112 and an inner peripheral surface 122a of the shoulder base part 122 as an arithmetic average roughness Ra is set in a range of more than 0.04 and less than 5.9.

## Description

### Technical Field

The present disclosure relates to a friction stir spot welding tool with a pin and a shoulder, and a method for using the same.

### Background Art

As a method of overlapping and welding two or more members including a metal member, a fiber-reinforced thermoplastic resin member, and the like, welding using friction stirring is known. For friction stir welding, a friction stir spot welding tool including a pin and a shoulder having a hollow part for accommodating the pin may be used. For example, in a shoulder-first process, a shoulder is rotated to protrude and is press-fitted into an overlapping part of members, while a pin is retreated to accommodate a material overflowing due to the press-fitting.

Since a part of the tool is press-fitted into a welding target member while rotating, a part separated from the welding target member at the time of tool press-fitting may adhere inside the tool and be embraced. As the number of welding points increases, an embraced amount of a separated matter from the welding target member also increases, and finally, the separated matter adheres to a pin surface to hinder operation of the tool.

In the tool recited in Patent Literature 1, a gap formed between an outer peripheral surface of a pin and an inner peripheral surface of a shoulder is filled with an oil agent. The filled oil agent suppresses adhesion of a separated matter from a welding target member that has entered the gap between the pin and the shoulder of the tool. In addition, lubricating action between the pin and the shoulder by the oil agent reduces a load on the tool at the time of friction stir welding.

### Citation List

### Patent Literature

Patent Literature 1: JP 2021-53657 A

### Summary of Invention

### Problems to be Solved by the Invention

In a case of performing friction stir spot welding using the tool described above, in a state where two welding target members are overlapped in an up-down direction, i.e., in a state where the welding target members are stacked in a vertical direction, welding work may be performed with a distal end of the tool facing directly downward. However, in a state where the two welding target members overlap each other in a direction inclined with respect to the vertical direction, it is necessary to direct the distal end of the tool toward the welding target member in a state where an axis of the tool is inclined from the vertical direction. For example, the tool may be inclined to direct the axis of the tool horizontally or direct the distal end of the tool obliquely upward or directly upward. In this case, the oil agent in the gap may leak from a base of the tool.

An object of the present disclosure is to provide a friction stir spot welding tool that prevents leakage of an oil agent from a base of the tool even in a state where an axis of the tool is inclined from a vertical direction.

### Means for Solving the Problem

A friction stir spot welding tool according to an aspect of the present disclosure includes: a pin; and a shoulder having a hollow part into which the pin is inserted, the shoulder has a cylindrical shoulder distal end part and a cylindrical shoulder base part connected to an end on a base side of the shoulder distal end part, the shoulder distal end part and the shoulder base part forming the hollow part, the pin has a columnar pin distal end part to be inserted into the shoulder distal end part, and a columnar pin base part connected to an end on a base side of the pin distal end part and to be inserted into the shoulder base part, a gap is formed between an outer peripheral surface of the pin and an inner peripheral surface of the shoulder, and a base side surface roughness that is a value obtained by expressing a surface roughness of at least one of an outer peripheral surface of the pin base part and an inner peripheral surface of the shoulder base part as an arithmetic average roughness Ra is set in a range of more than 0.04 and less than 5.9.

A friction stir spot welding tool according to another aspect of the present disclosure includes: a pin; and a shoulder having a hollow part into which the pin is inserted, the shoulder has a cylindrical shoulder distal end part and a cylindrical shoulder base part continuous with an end on a base side of the shoulder distal end part, the shoulder distal end part and the shoulder base part forming the hollow part, the pin has a columnar pin distal end part to be inserted into the shoulder distal end part, and a columnar pin base part connected to an end on a base side of the pin distal end part and to be inserted into the shoulder base part, a gap is formed between an outer peripheral surface of the pin and an inner peripheral surface of the shoulder, and in a case where a value obtained by expressing a surface roughness of at least one of an outer peripheral surface of the pin base part and an inner peripheral surface of the shoulder base part as an arithmetic average roughness Ra is defined as a base side surface roughness, and a value obtained by expressing a surface roughness of at least one of an outer peripheral surface of the pin distal end part and an inner peripheral surface of the shoulder distal end part as the arithmetic average roughness Ra is defined as a distal end side surface roughness, a surface roughness ratio that is a value obtained by dividing the base side surface roughness by the distal end side surface roughness is set in a range of more than 1 and 118 or less.

A method for using a friction stir spot welding tool according to still another aspect of the present disclosure is a method for using the friction stir spot welding tool, the method including: filling a gap between the outer peripheral surface of the pin and the inner peripheral surface of the shoulder with an oil agent; directing a distal end of the tool toward a welding target to be subjected to friction stir spot welding while inclining an axis of the tool from a vertical direction; and performing the friction stir spot welding of the welding target.

### Advantageous Effects of the Invention

According to the present disclosure, it is possible to provide a friction stir spot welding tool that prevents leakage of an oil agent from a base of the tool even in a state where an axis of the tool is inclined from a vertical direction.

### Brief Description of Drawings

FIG. 1 is a cutaway cross-sectional view illustrating a configuration of a friction stir spot welding tool according to an embodiment of the present disclosure.
FIG. 2 is an exploded view of the friction stir spot welding tool in FIG. 1.
FIG. 3 is a schematic diagram of a friction stir spot welding device which includes the friction stir spot welding tool of FIG. 1 and in which an oil agent fills the tool.
FIG. 4 is an explanatory diagram showing an example in which a surface roughness of an inner peripheral surface of a shoulder base part in FIG. 1 is changed by changing finish processing on the inner peripheral surface, and is a diagram schematically showing a state of roughness of each inner peripheral surface in (I) as sintered, (II) fine processing, (III) intermediate processing, and (IV) rough processing.
FIG. 5 is a view illustrating a state in which an entire pin of the tool of FIG. 1 is inserted into a shoulder, and is an explanatory cross-sectional view illustrating a case where a clearance distance, which is an axial length of a base gap part, is 42 mm.
FIG. 6 is an explanatory cross-sectional view illustrating a case where the pin of FIG. 1 is pulled by X mm toward a base side to make a part of a pin base part come out of the shoulder, so that the axial length of the base gap part becomes 42 - X mm.
FIG. 7 is a view illustrating a state in which the entire pin of the tool of FIG. 1 is inserted into a hollow part of the shoulder, and is an explanatory cross-sectional view illustrating a volume percentage of each of a distal end gap part, the base gap part, and an intermediate gap part to a volume of an entire gap.
FIG. 8 is a diagram showing presence or absence of leakage of an oil agent when the clearance distance and a percentage of a dropped oil amount to the gap of the tool under temperature conditions, ambient temperature and 70°C, are changed in order to determine presence or absence of leakage of the oil agent from the base by vertically inverting the tool in which the inner peripheral surface of the shoulder base part in FIG. 1 remains sintered.
FIG. 9 is a diagram showing presence or absence of leakage of the oil agent when the clearance distance and the percentage of the dropped oil amount to the gap of the tool under the temperature conditions, ambient temperature and 70°C, are changed in order to determine presence or absence of leakage of the oil agent from the base by vertically inverting the tool in which the inner peripheral surface of the shoulder base part in FIG. 1 is roughly processed.
FIG. 10 is a graph showing changes in a contact angle of oil droplets immediately after and 3 seconds after the oil agent is dropped onto a sample surface in the cases of (I) as sintered, (II) fine processing, (III) intermediate processing, and (IV) rough processing, in order to verify a difference in wettability of the oil agent on different surface roughnesses.
FIG. 11 is an explanatory view illustrating the contact angle and a wet spreading area of the oil droplets on the sample surface, and is a view showing a state of the oil droplets in the case of (I) as sintered, (II) fine processing, or (III) intermediate processing.
FIG. 12 is an explanatory view illustrating the contact angle and the wet spreading area of the oil droplets on the sample surface, and is a view showing a state of the oil droplets in the case of (IV) rough processing.
FIG. 13 is a view illustrating a change in wet spreading of the oil droplets on the sample surface, and is a view showing states of the oil agent 3 seconds after dropping and 50 seconds after the dropping.
FIG. 14 is a graph showing a change in a wet spreading area from 3 seconds after to 50 seconds after the oil agent is dropped onto the sample surface in the cases of (I) as sintered, (II) fine processing, (III) intermediate processing, and (IV) rough processing.
FIG. 15 is a bar graph showing a change in a wet spreading rate from 3 seconds after to 50 seconds after the oil agent is dropped onto the sample surface in the cases of (I) as sintered, (II) fine processing, (III) intermediate processing, and (IV) rough processing.

### Description of Embodiments

### [First Embodiment]

In the following, embodiments of the present disclosure will be described in detail with reference to the accompanying drawings. A friction stir spot welding tool according to the present disclosure can be applied to manufacture of various welded bodies obtained by overlapping two or more structural members such as a metal or resin plate, a frame, an exterior member, or a columnar member and performing spot welding thereof. The welded body to be manufactured is a constituent member of a structure such as an aircraft, a railway vehicle, or an automobile.

### (Configuration of Tool 1)

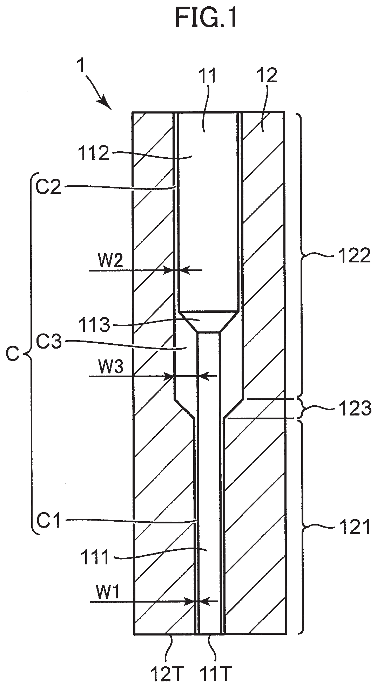

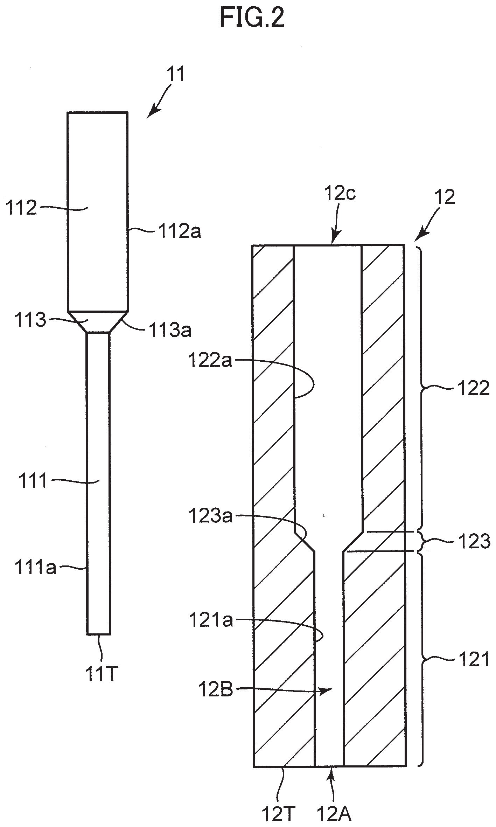

As illustrated in FIGS. 1 and 2, a friction stir spot welding tool 1 includes a pin 11 and a shoulder 12 having a hollow part 12B into which the pin 11 is inserted. Note that the drawings related to the tool 1 in FIGS. 1 to 7 below are schematic views, and do not limit an actual tool shape.

As illustrated in FIG. 2, the pin 11 is formed of a columnar body whose diameter narrows in stages toward a lower end part 11T. The pin 11 has a columnar pin distal end part 111, a columnar pin base part 112, and a tapered pin intermediate part 113. The pin base part 112 is connected to an end on a base side of the pin distal end part 111 via the tapered pin intermediate part 113.

The pin distal end part 111 is a part having the smallest outer diameter forming a distal end part in the pin 11, and has a distal end surface as the lower end part 11T of the pin 11. The pin base part 112 is located at a base part of the pin 11 in an axial direction and is a columnar part having a larger diameter than the pin distal end part 111. The pin intermediate part 113 is a tapered part connecting an upper end of the pin distal end part 111 and a lower end of the pin base part 112. The pin intermediate part 113 has a lower end having the same outer diameter as the upper end of the pin distal end part 111 and an upper end having the same outer diameter as the lower end of the pin base part 112. The pin intermediate part 113 has a tapered outer shape whose outer diameter increases from the lower end toward the upper end. In a case where regions corresponding to the pin distal end part 111 and the pin base part 112 have the same diameter or a close outer diameter, the tapered pin intermediate part 113 may be omitted.

As shown in FIG. 2, the shoulder 12 is formed of a cylindrical body whose inner diameter gradually decreases toward a lower end part 12T. The shoulder 12 has a shoulder distal end part 121 having the smallest inner diameter, a shoulder base part 122 having the largest inner diameter, and a shoulder intermediate part 123 having a tapered inner surface 123a. The shoulder base part 122 is connected to an end on the base side of the shoulder distal end part 121 via the shoulder intermediate part 123.

The shoulder distal end part 121 is a part having the smallest inner diameter and forming a distal end part in the shoulder 12, and has a distal end surface as the lower end part 12T of the shoulder 12. The lower end part 12T is a ring-shaped part. The shoulder base part 122 is a cylindrical part located at an axial base part of the shoulder 12 and having an inner diameter larger than the inner diameter of the shoulder distal end part 121. The shoulder intermediate part 123 has the tapered inner surface 123a connecting an upper end of the shoulder distal end part 121 and a lower end of the shoulder base part 122. The tapered inner surface 123a has a lower end having the same inner diameter as the shoulder distal end part 121, an upper end having the same inner diameter as the shoulder base part 122, and an intermediate part whose inner diameter increases from the lower end toward the upper end.

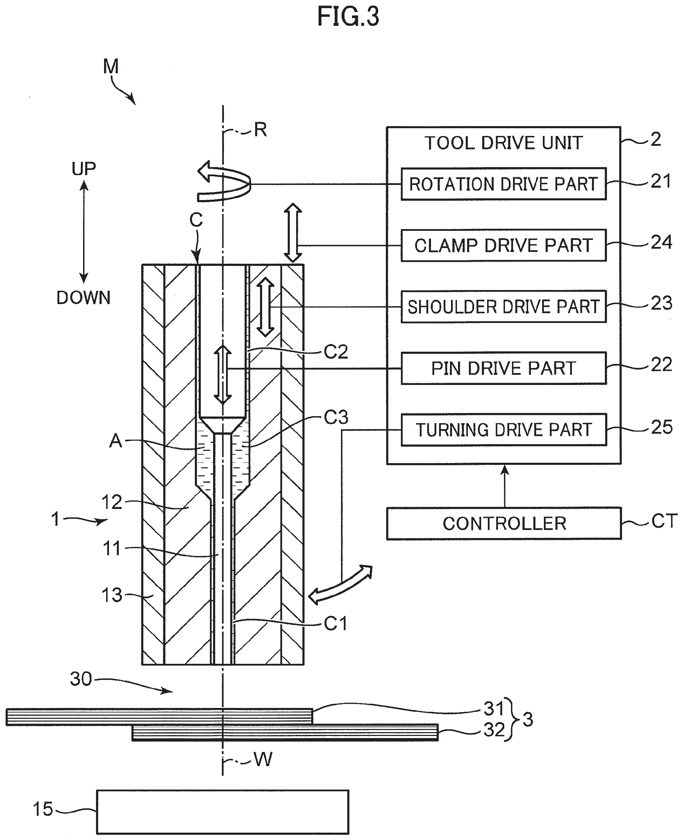

The above-described shoulder distal end part 121, shoulder intermediate part 123, and shoulder base part 122 constituting the shoulder 12 form the hollow part 12B. The hollow part 12B is opened to the outside of the shoulder 12 by a distal end opening 12A formed at a lower end of the shoulder distal end part 121 and a base opening 12C formed at an upper end of the shoulder base part 122. Note that, although in the tool 1 actually used, a grip part coupled to a shoulder drive part 23 illustrated in FIG. 3 is provided at the upper end of the shoulder base part 122, the grip part is omitted in FIGS. 1 to 3.

The pin 11 is inserted into the hollow part 12B in a state where the pin distal end part 111 is inserted into the shoulder distal end part 121 and the pin base part 112 is inserted into the shoulder base part 122. As a result, a gap C that can be filled with an oil agent A illustrated in FIG. 3 is formed between an outer peripheral surface of the pin 11 and an inner peripheral surface of the shoulder 12.

The gap C has a distal end gap part C1 on a distal end side of the tool 1, a base gap part C2 on a base side of the tool 1, and an intermediate gap part C3. The distal end gap part C1 is a cylindrical space sandwiched between an outer peripheral surface 111a of the pin distal end part 111 and an inner peripheral surface 121a of the shoulder distal end part 121. The base gap part C2 is a cylindrical space sandwiched between an outer peripheral surface 112a of the pin base part 112 and an inner peripheral surface 122a of the shoulder base part 122. The intermediate gap part C3 is a cylindrical space surrounded by the outer peripheral surface 111a of the pin distal end part 111 and an outer peripheral surface 113a of the pin intermediate part 113, and the inner peripheral surface 122a of the shoulder base part 122 and the tapered inner surface 123a of the shoulder intermediate part 123.

A width of the gap C is a width that can be filled with the oil agent A, and is set to a width that allows the pin 11 to relatively move inside the hollow part 12B with respect to the shoulder 12, specifically, to linearly reciprocate and rotationally move in the axial direction. Widths w1, w2, and w3 of the distal end gap part C1, the base gap part C2, and the intermediate gap part C3 constituting the gap C are set in consideration of the following points.

The width w1 of the distal end gap part C1 is set to be very narrow in order to prevent a part separated from a welding material from adhering to the inside of the distal end gap part C1 of the tool 1 during friction stir spot welding. From such a viewpoint, the width w1 is set to a narrow range of about 0.01 to 0.1 mm. The width w2 of the base gap part C2 is set to be wider than the width w1 of the distal end gap part C1 because there is a low risk of adhesion, to the inside of the base gap part C2, of a separated matter from the welding material. From such a viewpoint, the width w2 is set to a wide range of about 0.1 to 3.5 mm. The width w3 of the intermediate gap part C3 is set to be sufficiently wider than the width w2 of the base gap part C2 in order to hold a sufficient amount of the oil agent A inside the tool 1 at the time of friction stir spot welding. Therefore, the widths w1, w2, and w3 of the base gap part C2 and the intermediate gap part C3 are set to satisfy a relationship of w1<w2<w3.

As the oil agent A filled in the gap C, in a case of friction stir spot welding of a metal material as a welding material, a liquid or grease oil agent having an effect of preventing adhesion of metal powder as a separated matter from the metal material generated during welding work can be used. For example, a lubricating oil base oil, a mineral oil or a synthetic oil containing petroleum-based hydrocarbon as a main component, or the like can be used as the oil agent. In addition, a mineral oil, a synthetic oil, or the like to which molybdenum, graphite, solid paraffin, or metal powder is added as a solid lubricant may be used as the oil agent.

A viscosity of the oil agent A filled in the gap C is in a range of 1 to 101 mm²/sec, and preferably in a range of 1 to 21 mm²/sec, under a temperature condition of 40°C.

### (Configuration of Friction Stir Spot Welding Device M)

FIG. 3 is a schematic diagram of a friction stir spot welding device M which includes thus configured friction stir spot welding tool 1 and in which the oil agent A fills the tool 1. The friction stir spot welding device M includes thus configured friction stir spot welding tool 1, a tool drive unit 2 that rotates and lifts and lowers the tool 1, and a controller CT that controls operation of each part of the friction stir spot welding device M, i.e., a control unit of the tool 1. Note that although in FIG. 3, direction indications of "up" and "down" are attached, this is for convenience of description and is not intended to limit a use direction of the tool 1.

The tool 1 is supported by various tool fixing parts. The tool fixing part is, for example, a distal end part of an articulated robot. A backup 15 is disposed so as to be opposed to a lower end surface of the tool 1. At least two members as a welding target are disposed between the tool 1 and the backup 15. FIG. 3 illustrates an example in which an overlapping part 30 is disposed between the tool 1 and the backup 15, the overlapping part 30 having a part of a first member 31 made of a flat plate and a part of a second member 32 similarly made of a flat plate overlapping each other in the up-down direction.

The tool 1 in FIG. 3 is disposed such that an axis of the tool 1 extends in the up-down direction. The pin 11 is rotatable about the axis as a rotation axis R, and is movable forward and backward in the up-down direction along the rotation axis R. When the tool 1 is used, the rotation axis R and a spot welding position W in the overlapping part 30 are aligned.

An axis of the shoulder 12 is on the same axis as an axis of the pin 11, i.e., the rotation axis R. The shoulder 12 can rotate about the rotation axis R and can move forward and backward in the up-down direction along the rotation axis R. The gap C between the outer peripheral surface of the pin 11 and the inner peripheral surface of the shoulder 12, specifically, the distal end gap part C1, the base gap part C2, and the intermediate gap part C3 constituting the gap C, are filled with the oil agent A. The oil agent A enhances lubricity between the pin 11 and the shoulder 12 and suppresses adhesion of an adhesive matter in the gap C.

When the gap C is filled with the oil agent A, the oil agent A may be filled in the gap C by an oil supply device in a state where the pin 11 in FIG. 1 is raised to a position where the pin intermediate part 113 comes out of the shoulder base part 122.

In the tool 1, the pin 11 and the shoulder 12 independently move in the axial direction when friction stir spot welding is performed. In other words, both the shoulder 12 and the pin 11 inserted into the shoulder 12 can relatively move in the rotation axis R direction while rotating about the rotation axis R. Specifically, the pin 11 and the shoulder 12 can not only move up and down simultaneously along the rotation axis R, but also move independently such that one lowers and the other rises.

The tool 1 of FIG. 3 further includes a clamp 13 covering an outer periphery of the shoulder 12. The clamp 13 is a cylindrical member having a hollow part into which the shoulder 12 is inserted. An axis of the clamp 13 is also on the same axis as the rotation axis R. The clamp 13 does not rotate about the axis, but moves up and down, i.e., moves forward and backward in the up-down direction along the rotation axis R. When the pin 11 or the shoulder 12 performs friction stir welding, the clamp 13 serves to surround an outer periphery thereof. Surrounding by the clamp 13 enables a friction stir spot welding part to be finished smoothly without scattering a friction stirring material.

The backup 15 includes a plane that abuts on a lower surface side of the overlapping part 30 as a welding target. The backup 15 is a backing member that supports the overlapping part 30 when the pin 11 or the shoulder 12 is press-fitted into the overlapping part 30. The clamp 13 receives a biasing force from a pressurizing mechanism such as a spring and presses the overlapping part 30 against the backup 15.

The tool drive unit 2 includes a rotation drive part 21, a pin drive part 22, the shoulder drive part 23, a clamp drive part 24, and a turning drive part 25. The rotation drive part 21 includes a motor, a driving gear, and the like, and rotatably drives the pin 11 and the shoulder 12 about the rotation axis R. The pin drive part 22 is a mechanism that causes the pin 11 to move forward and backward along the rotation axis R. The pin drive part 22 drives the pin 11 so that the pin 11 is press-fitted into the overlapping part 30 and retreated from the overlapping part 30. The shoulder drive part 23 is a mechanism that causes the shoulder 12 to move forward and backward along the rotation axis R, and causes the shoulder 12 to be press-fitted into and retreated from the overlapping part 30. The clamp drive part 24 is a mechanism that causes the clamp 13 to move forward and backward along the rotation axis R. The clamp drive part 24 causes the clamp 13 to move in the up-down direction toward the overlapping part 30 and causes the overlapping part 30 to be pressed against the backup 15.

The turning drive part 25 is a mechanism that causes the tool 1 to turn and move in a direction inclined in the vertical direction. The spot welding position W in the overlapping part 30 of the first member 31 and the second member 32 as a welding target may face the direction inclined in the vertical direction depending on a shape of a product such as an aircraft to be manufactured. For example, the spot welding position W may face a horizontal direction or a direction inclined upward from the horizontal direction. Even in such a case, the turning drive part 25 turns and moves the tool 1 in the direction inclined in the vertical direction, so that the distal end of the tool 1 can be directed to the overlapping part 30.

The controller CT, which is configured with a microcomputer or the like, controls operation of the tool drive unit 2 and the other mechanisms by executing a predetermined control program. Specifically, the controller CT controls the rotation drive part 21 to cause the pin 11 and the shoulder 12 to perform required rotation operation. In addition, the controller CT controls the pin drive part 22, the shoulder drive part 23, the clamp drive part 24, and the turning drive part 25 to cause the pin 11, the shoulder 12, and the clamp 13 to perform required forward and backward movement operation and turning operation.

### (Friction Welding by Friction Stir Spot Welding Device M)

As a method of friction welding by the friction stir spot welding device M, there are roughly a pin-first process of first press-fitting the pin 11 of the tool 1 into an overlapping part of a welding member and a shoulder-first process of first press-fitting the shoulder 12 into an overlapping part of a welding member.

For example, in the shoulder-first process, first, as a step of preheating the overlapping part 30, the controller CT causes the pin 11 and the shoulder 12 to rotate at a predetermined rotation speed about the axis in a state where a lower end of the tool 1 is in contact with a surface of the first member 31. Next, in a step of press-fitting the shoulder 12, the controller CT causes the shoulder 12 to lower and be press-fitted into the overlapping part 30 while causing the pin 11 to be retreated upward. With this operation, a material in a press-fitting region of the shoulder 12 is stirred. In addition, an overflow material overflowing from the overlapping part 30 by the press fitting is released to a space inside the distal end of the shoulder 12 generated by the retreat of the pin 11. As described above, in the present embodiment, the pin 11 is relatively moved upward with respect to the shoulder 12 at the time of friction stir welding. Thereafter, in a step of backfilling the overflow material, the controller CT causes the shoulder 12 to rise and retreat while causing the pin 11 to lower. As the pin 11 lowers, the overflow material released into the space inside the distal end of the shoulder 12 is backfilled in the press-fitting region of the shoulder 12. Thereafter, in a leveling step, lower end surfaces of the pin 11 and the shoulder 12 are rotated in a state of being returned to a height position of the surface of the first member 31, thereby smoothing the spot welding part. Thus, the first member 31 and the second member 32 can be welded at the spot welding part.

### (Prevention of Leakage of Oil Agent A from Base of Tool 1)

In a case where the tool 1 is applied to the friction stir spot welding device M to perform friction welding, when the spot welding position W of the overlapping part 30 faces the direction inclined in the vertical direction, the turning drive part 25 causes the tool 1 to turn and move in the direction inclined in the vertical direction, so that the distal end of the tool 1 is used toward the overlapping part 30.

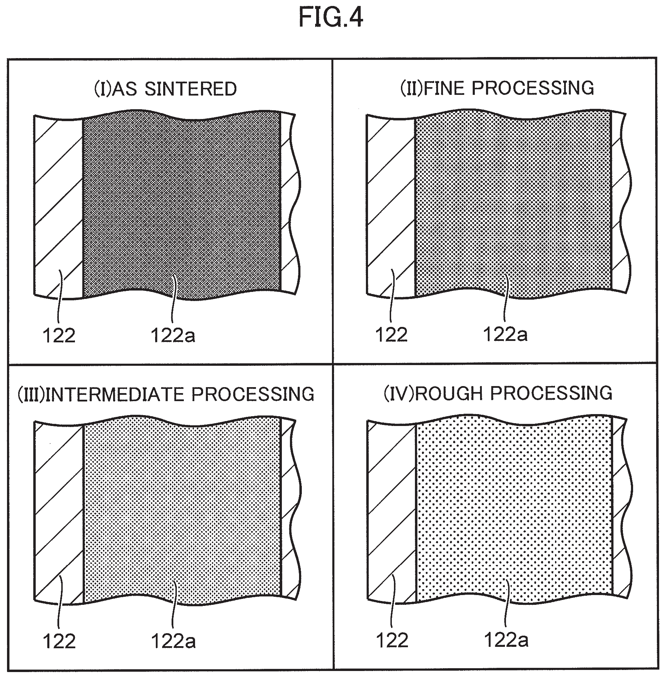

In the tool 1 of the present embodiment, in order to prevent leakage of the oil agent A from the base of the tool 1 even in a state where the axis of the tool 1, i.e., the rotation axis R illustrated in the drawing, is inclined from the vertical direction, a surface roughness of at least one of the outer peripheral surface 112a of the pin base part 112 and the inner peripheral surface 122a of the shoulder base part 122 is set within a range enabling leakage of the oil agent A to be prevented. Specifically, a base side surface roughness, which is a value obtained by expressing the surface roughness of at least one of the outer peripheral surface 112a of the pin base part 112 and the inner peripheral surface 122a of the shoulder base part 122 as an arithmetic average roughness Ra, is set in a range of more than 0.04 and less than 5.9. In the present embodiment, by adjusting the surface roughness of the inner peripheral surface 122a of the shoulder base part 122 illustrated in FIG. 4, the base side surface roughness is set in the above range. By setting the base side surface roughness in the above range, it is possible to prevent the oil agent A from leaking from the base of the tool 1 even in a state where the axis of the tool 1, i.e., the rotation axis R in FIG. 3, is inclined from the vertical direction when the tool 1 is used for the welding work in a state where the gap C between the pin 11 and the shoulder 12 is filled with the oil agent A. Even when the outer peripheral surface 112a of the pin base part 112 is set to have the above-described base side surface roughness, it is possible to prevent the oil agent A from leaking from the base of the tool 1.

For example, when the tool 1 is turned and moved with the distal end of the tool 1 directed obliquely upward or in a direction close to immediately above, the base of the tool 1 comes lower than the distal end. Even in this case, by setting the base side surface roughness to be in the above range, the oil agent A is held inside the base gap part C2 of the gap C, so that the oil agent A can be prevented from leaking from the base of the tool 1.

In the tool 1 of the present embodiment, the pin 11 is preferably relatively movable in the axial direction with respect to the shoulder 12 by the control of the pin drive part 22 by the controller CT so that an axial length of the base gap part C2 formed by the outer peripheral surface 112a of the pin base part 112 and the inner peripheral surface 122a of the shoulder base part 122 in the gap C is in a range of 27 mm or more. The above configuration enables the oil agent A to be reliably prevented from leaking from the base of the tool 1.

In the tool 1 of the present embodiment, the inner peripheral surface 122a of the shoulder base part 122 is preferably formed of a sintered surface of cemented carbide so that the base side surface roughness falls within the range of more than 0.04 and less than 5.9. Forming the inner peripheral surface 122a of the shoulder base part 122 with a sintered surface of cemented carbide results in making the inner peripheral surface 122a have a predetermined dimension and a predetermined base side surface roughness. Therefore, leakage can be prevented without performing finish processing for achieving a predetermined base side surface roughness.

In the method for using the tool 1 of the present embodiment, first, as illustrated in FIG. 3, the gap C between the outer peripheral surface of the pin 11 and the inner peripheral surface of the shoulder 12 is filled with the oil agent A. Next, in a case where the overlapping part 30 as a welding target for which friction stir spot welding is performed has an overlap in the direction inclined from the vertical direction, the distal end of the tool 1 is caused to head toward the overlapping part 30 as a welding target for which friction stir spot welding is performed while the axis of the tool 1 is turned and moved by the turning drive part 25 so as to be inclined from the vertical direction. Then, the friction stir spot welding of the overlapping part 30 is performed. Thus, even when the friction stir spot welding is performed with the distal end of the tool 1 directed in the direction inclined from the vertical direction, since the tool 1 of the present embodiment has the above-described base side surface roughness, it is possible to prevent the oil agent A from leaking from the base of the tool 1.

In the method for using the tool 1 of the present embodiment, the gap C is preferably filled with the oil agent A in a volume of 70% or less of the volume of the gap C in the entire tool 1. By filling the gap C with the oil agent A within the above range of volume, it is possible to reliably prevent the oil agent A from leaking from the base of the tool 1.

### (Description of Demonstration Experiment for Prevention of Leakage of Oil Agent A)

Next, a demonstration experiment for prevention of leakage of the oil agent A will be described with reference to FIGS. 4 to 9 with respect to the tool 1 and the method for using the same that enable the above-described prevention of leakage of the oil agent A.

FIG. 4 is an explanatory diagram showing an example in which a surface roughness of the inner peripheral surface 122a of the shoulder base part 122 in FIG. 1 is changed by changing the finish processing on the inner peripheral surface, and is a diagram showing a state of roughness of each inner peripheral surface in (I) as sintered, (II) fine processing, (III) intermediate processing, and (IV) rough processing.

The inner peripheral surface 122a of the shoulder base part 122 in the case of (I) as sintered in FIG. 4 is formed of a sintered surface of cemented carbide, and is a surface having a small surface roughness. As a result, the surface roughness of the inner peripheral surface 122a becomes about 1.8 in the arithmetic average roughness Ra. In addition, the inner diameter of the inner peripheral surface 122a is substantially the dimension at the time of design. In other words, the inner peripheral surface 122a can be molded in a near net shape.

The inner peripheral surfaces 122a of the shoulder base part 122 in the cases of (II) fine processing, (III) intermediate processing, and (IV) rough processing in FIG. 4 are surfaces obtained by subjecting the inner peripheral surfaces 122a formed of the sintered surface of cemented carbide in the case of (I) as sintered in FIG. 4 to electrical discharge processing to gradually increase the surface roughnesses in the order of (II) to (IV). In (II) to (IV) of FIG. 4, the surface roughness of the inner peripheral surface 122a is, in the arithmetic average roughness Ra, (II) fine processing: about 3.1, (III) intermediate processing: about 4.8, and (IV) rough processing: about 5.9.

Among (I) to (IV) of FIG. 4, in (I) as sintered, (II) fine processing, and (III) intermediate processing, the surface roughness of the inner peripheral surface 122a is (I) as sintered: about 1.8, (II) fine processing: about 3.1, and (III) intermediate processing: about 4.8 in the arithmetic average roughness Ra. Therefore, it is considered that no leakage from the base of the tool 1 occurs because the surface roughness in the arithmetic average roughness Ra is in the range of more than 0.04 and less than 5.9. On the other hand, since (IV) rough processing: about 5.9 exceeds the above range, it is considered that the leakage of the oil agent A from the base of the tool 1 cannot be suppressed.

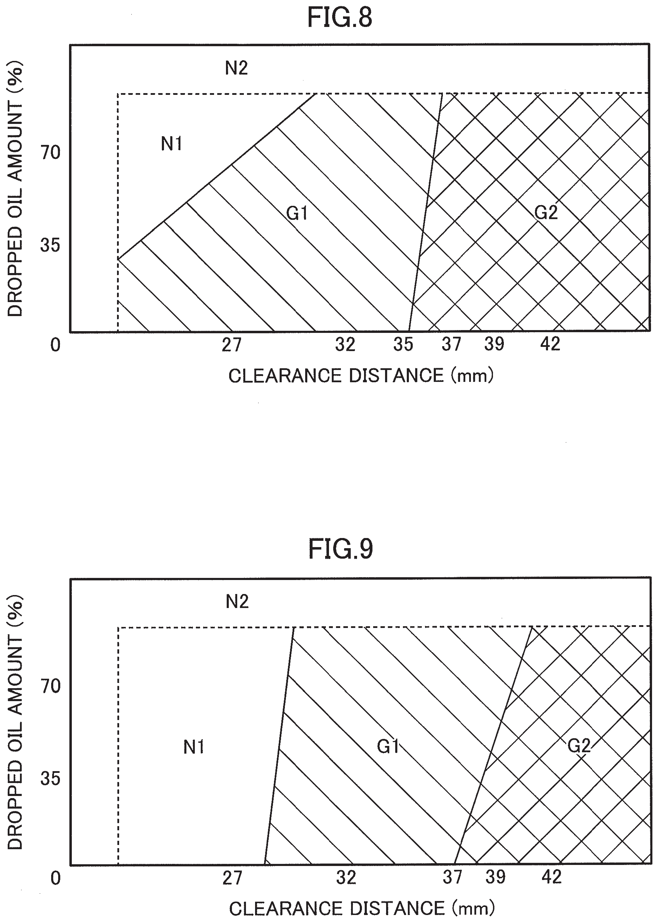

Therefore, with reference to FIGS. 8 and 9, it is verified that it is possible to suppress leakage of the oil agent A from the base of the tool 1 in the states of (I) as sintered, (II) fine processing, (III) intermediate processing, and (IV) rough processing in FIG. 4, and it is difficult to suppress leakage of the oil agent A from the base of the tool 1 in the state of (IV) rough processing.

As shown in FIGS. 8 and 9, in a case where the gap C of the tool 1 was filled with the oil agent A with dropped oil amounts (%) of 35% and 70%, presence or absence of leakage of the oil agent A from the base of the tool 1 was verified when the tool 1 was vertically inverted and maintained with the base of the tool 1 facing downward for 30 minutes in a state where a clearance distance (mm) of the tool 1 was changed from 27 to 42 mm. This verification was performed at ambient temperature and at a temperature of 70°C.

FIG. 8 is a diagram showing presence or absence of leakage of the oil agent A when the clearance distance, which is the axial length of the base gap part C2, and the percentage of the dropped oil amount to the gap C of the tool 1 are changed under the temperature conditions, ambient temperature and 70°C, in order to determine presence or absence of leakage of the oil agent A from the base by vertically inverting the tool 1 in which the inner peripheral surface 122a of the shoulder base part 122 in FIG. 1 remains in the state of (I) as sintered in FIG. 4.

FIG. 9 is a diagram showing presence or absence of leakage of the oil agent A when the clearance distance and the percentage of the dropped oil amount to the gap of the tool 1 are changed under the temperature conditions, ambient temperature and 70°C, in order to determine presence or absence of leakage of the oil agent A from the base by vertically inverting the tool in which the inner peripheral surface 122a of the shoulder base part 122 in FIG. 1 is in the state of (IV) rough processing in FIG. 4.

Here, a region G1 in FIGS. 8 and 9 is a range in which no leakage of the oil agent A occurred at ambient temperature, and is also a range including a region G2. The region G2 is a range in which no leakage of the oil agent A occurred under the temperature condition of 70°C. A region N1 in FIGS. 8 and 9 is a range where leakage of the oil agent A occurred at ambient temperature, and a region N2 indicates a range where the gap C of the tool 1 could not be filled with the oil agent A.

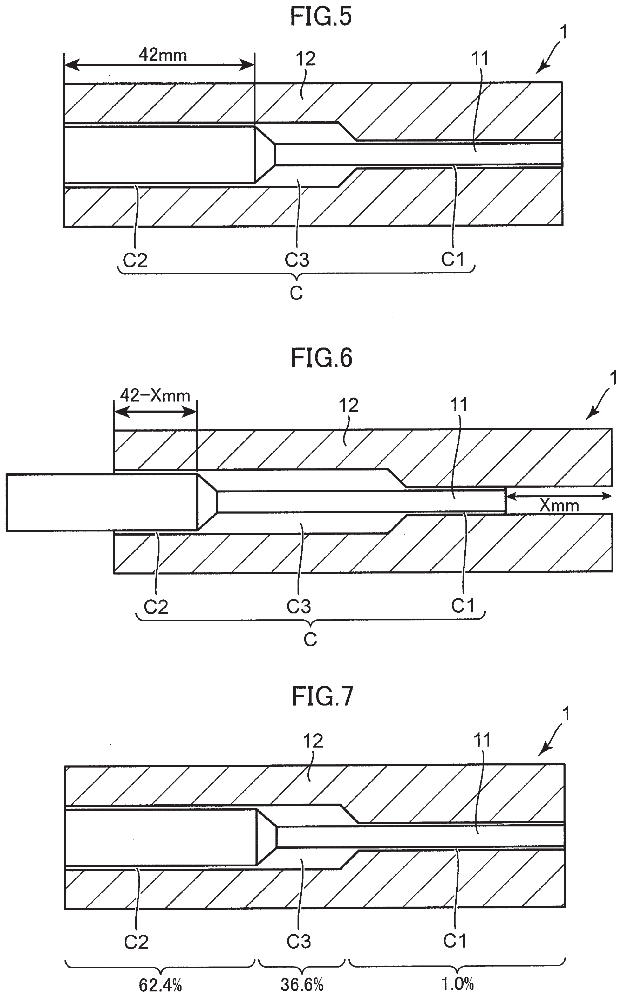

The clearance distance shown in FIGS. 8 and 9 is changed in the range of 27 to 42 mm according to an amount of the pin 11 pulled out as shown in FIGS. 5 and 6. FIG. 5 is a view illustrating a state in which the entire pin 11 of the tool 1 in FIG. 1 is inserted into the hollow part 12B of the shoulder 12, and is an explanatory cross-sectional view illustrating a case where the clearance distance, which is the axial length of the base gap part C2, is 42 mm. FIG. 6 is an explanatory cross-sectional view illustrating a case where the pin 11 in FIG. 1 is pulled by X mm to the base side, i.e., to the left side of FIG. 6, to cause a part of the pin base part 112 to come out of the shoulder 12, and the clearance distance, which is the axial length of the base gap part C2, becomes 42-X mm. When a drawing amount X mm of the pin 11 in FIG. 6 is changed within a range of 0 to 15 mm, the clearance distance is changed within the range of 27 to 42 mm as illustrated in FIGS. 8 and 9.

The dropped oil amount (%) shown in FIGS. 8 and 9 will be described in detail with reference to FIG. 7. FIG. 7 is a view illustrating a state in which the entire pin 11 of the tool 1 in FIG. 1 is inserted into the hollow part 12B of the shoulder 12, and is an explanatory cross-sectional view illustrating a volume percentage of each of the distal end gap part C1, the base gap part C2, and the intermediate gap part C3 with respect to the volume of the entire gap C. As illustrated in FIG. 7, the volume percentage of the distal end gap part C1 is set to 1.0%, the volume percentage of the base gap part C2 is set to 62.4%, and the volume percentage of the intermediate gap part C3 is set to 36.6%. In this case, a sum of a volume percentage of a distal end part of the gap C, i.e., the volume percentage of the distal end gap part C1, and the volume percentage of the intermediate gap part C3 is 37.6%. When 35% of the oil agent A is dropped with respect to the entire volume of the gap C, i.e., when the dropped oil amount (%) is 35%, it becomes substantially the same as the volume percentage of 36.6% of the intermediate gap part C3. In addition, when 70% of the oil agent A is dropped with respect to the entire volume of the gap C, i.e., when the dropped oil amount (%) is 70%, it can be seen that the amount exceeds 37.6% as the sum of the volume percentage of the distal end gap part C1 and the volume percentage of the intermediate gap part C3, which is the amount of the oil agent A filled not only in the distal end gap part C1 and the intermediate gap part C3 but also in a part of the base gap part C2. The above 35% and 70% are values indicated by the vertical axis of the graphs of FIGS. 8 and 9.

As can be seen from FIG. 8, at the dropped oil amount of 35%, the inner peripheral surface 122a of the shoulder base part 122 remaining in the state of (I) as sintered in FIG. 4 is included in the range of the region G1 in which no leakage of the oil agent occurred in a case where the clearance distance is in the range of 27 to 42 mm at ambient temperature, and is included in the range of the region G2 in which no leakage of the oil agent occurred in a case where the clearance distance is in a range of 35 to 42 mm at 70°C. In addition, at the dropped oil amount of 70%, the inner peripheral surface 122a is included in the range of the region G1 in which no leakage of the oil agent occurred in a case where the clearance distance is in a range of 32 to 42 mm at ambient temperature, and is included in the range of the region G2 in which no leakage of the oil agent A occurred in a case where the clearance distance is in a range of 37 to 42 mm at 70°C.

In addition, it has been confirmed by experiments that also in the state of (II) fine processing in FIG. 4 and the state of (III) intermediate processing in FIG. 4, no leakage of the oil agent A occurred in a case of the dropped oil amount of 35%, the clearance distance of 27 mm, and ambient temperature. Furthermore, it has been confirmed by experiments that no leakage of the oil agent A occurred also in a case of the dropped oil amount of 35%, the clearance distance of 37 mm, and the temperature of 70°C. Therefore, it is estimated that the same determination result as the determination result of FIG. 8 verified in the state of (I) as sintered in FIG. 4 can be obtained also in the state of (II) fine processing in FIG. 4 and the state (III) intermediate processing in FIG. 4.

Next, with reference to FIG. 9, it can be seen that at the dropped oil amount of 35%, the inner peripheral surface 122a of the shoulder base part 122 in the state of (IV) rough processing in FIG. 4 is included in a range of the region N1 where leakage of the oil agent occurs in a case where the clearance distance is 27 mm at ambient temperature. It can be also seen that at 70°C, when the clearance distance is 37 mm, the leakage occurs because the inner peripheral surface 122a is out of the range of the region G2 where no leakage of the oil agent occurs. It can be seen that when the dropped oil amount is 70%, leakage of the oil agent A occurs because the inner peripheral surface 122a deviates from the range of the region G2 where no leakage of the oil agent A occurred in a case where the clearance distance is 39 mm at 70°C. Comparing the determination results of FIG. 8 and FIG. 9, it can be seen that in the state of (IV) rough processing in FIG. 4, both the regions G1 and G2 in which no leakage of the oil agent A occurs are narrow as shown in FIG. 9.

As can be seen from the above results, in order to prevent leakage of the oil agent A from the base of the tool 1, it is only necessary to set a surface roughness of at least one of the outer peripheral surface 112a of the pin base part 112 and the inner peripheral surface 122a of the shoulder base part 122 within a range enabling leakage of the oil agent A to be prevented. Specifically, it is understood that the surface roughness only needs to be set to the range of more than 0.04 and less than 5.9 in the arithmetic average roughness Ra as described above.

In addition, from the determination result of FIG. 8, it is also understood that, in addition to the setting of the base side surface roughness described above, when the pin is relatively movable in the axial direction with respect to the shoulder 12 within a range where the clearance distance, i.e., the axial length of the base gap part C2, is 27 mm or more, leakage of the oil agent A from the base of the tool 1 is reliably prevented.

Furthermore, it is also understood that when the tool 1 is used at a use temperature of 70°C or higher, when the gap C is filled with the oil agent A within a range in which the clearance distance, i.e., the axial length of the base gap part C2, is 37 mm or more, leakage of the oil agent A from the base of the tool 1 can be reliably prevented even when the use temperature is high.

### (Relationship between Contact Angle and Surface Roughness)

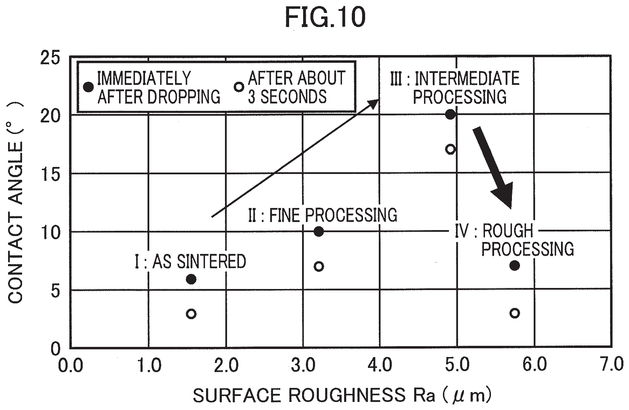

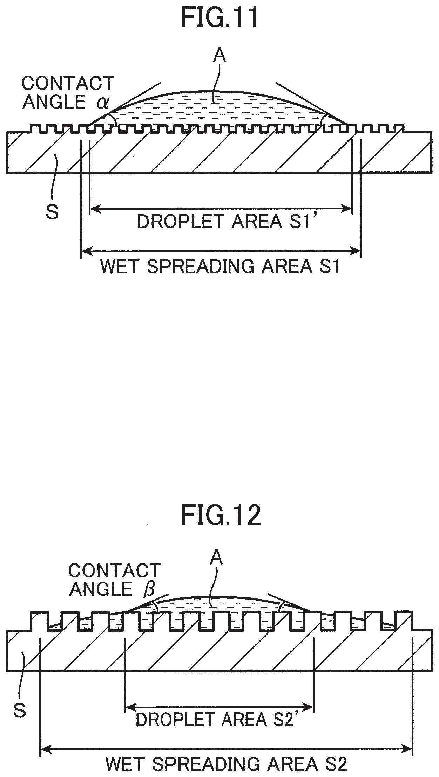

FIG. 10 is a graph showing changes in a contact angle of oil droplets immediately after and 3 seconds after the oil agent A is dropped as an oil agent to a surface of a sample S in FIGS. 11 and 12 in the cases of (I) as sintered, (II) fine processing, (III) intermediate processing, and (IV) rough processing corresponding to FIGS. 4 (I) to (IV) in order to verify a difference in wettability of the oil agent on different surface roughnesses.

FIGS. 11 and 12 are explanatory views illustrating the contact angle and a wet spreading area of oil droplets on the surface of the sample S. FIG. 11 is a view showing a state of the oil droplets in the case of (I) as sintered, (II) fine processing, or (III) intermediate processing. FIG. 12 is a view showing a state of the oil droplets in (IV) rough processing.

As can be seen from the graph in FIG. 10, in the cases of (I) as sintered, (II) fine processing, and (III) intermediate processing, the surface roughness is in the range of more than 0.04 and less than 5.9 in the average surface roughness Ra, and a difference between the contact angles of the oil droplets immediately after and 3 seconds after dropping of the oil agent A is smaller than that in the case of (IV) rough processing, so that the leakage prevention effect is improved.

Moreover, in the cases of (II) fine processing and (III) intermediate processing, the contact angle of the oil droplets both immediately after and after 3 seconds after the dropping is larger than that in the case of the (IV) rough processing, and thus it can be seen that the leakage prevention effect is remarkably improved.

The contact angle in the case of (IV) rough processing in which leakage of the oil agent A occurs from the base of the tool 1 is greatly decreased from the contact angle in the case of the most recent (III) intermediate processing. The cause of this is considered as follows. In the state of the oil droplets A on the surface of the sample S in the case of (I) as sintered, (II) fine processing, or (III) intermediate processing shown in FIG. 11, a contact angle α is large, and thus an increase from a droplet area S1' immediately after dropping to a wet spreading area S1 after 3 seconds is small. A large contact angle α is considered to contribute to prevention of leakage of the oil agent A. On the other hand, in the case of (IV) rough processing shown in FIG. 12, the surface of the sample S has large irregularities, and a contact angle β is smaller than the contact angle α in FIG. 11. Therefore, the oil agent A is likely to wet and spread through between two adjacent protrusions, so that an increase from a droplet area S2' immediately after the dropping to a wet spreading area S2 after 3 seconds increases. Therefore, it is considered that leakage prevention cannot be achieved.

### (Wet Spreading Rate)

In addition to the setting of the base side surface roughness described above, it is preferable that at least one of the outer peripheral surface 112a of the pin base part 112 and the inner peripheral surface 122a of the shoulder base part 122 has a surface on which a wet spreading rate of the oil agent for 3 to 20 seconds is less than 5.65 mm²/sec. The above configuration enables the oil agent A to be reliably prevented from leaking from the base of the tool 1.

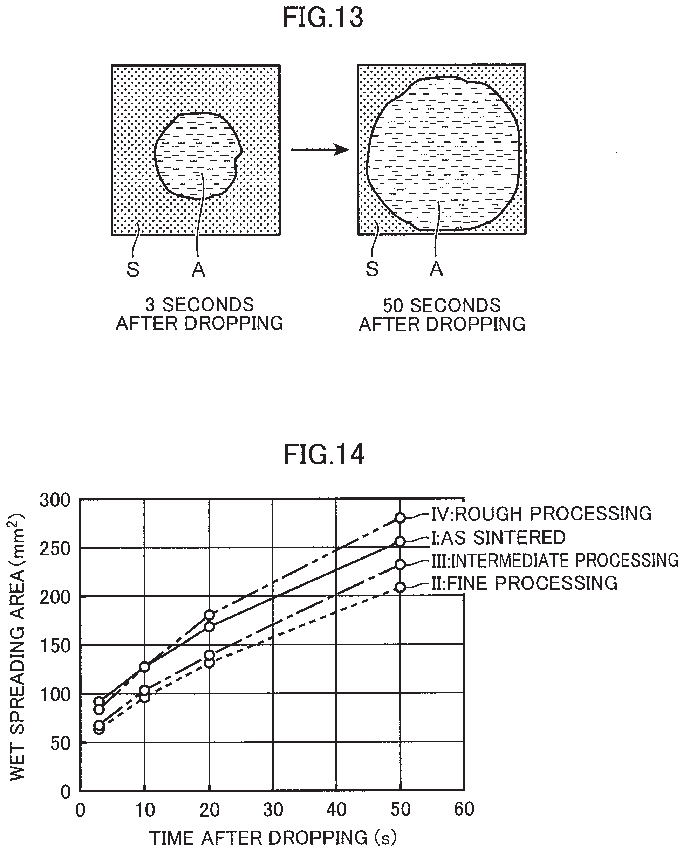

The above wet spreading rate is further verified with reference to FIGS. 13 to 15. FIG. 13 shows a change in wet spreading of the oil agent A on the surface of the sample S in the case of (IV) rough processing corresponding to (IV) of FIG. 4. It can be understood from FIG. 13 that the wet spreading area of the oil agent A after 50 seconds after the dropping is rapidly enlarged as compared with the wet spreading area of the oil agent A after 3 seconds after the dropping.

FIG. 14 is a graph showing changes in a wet spreading area from 3 seconds after to 50 seconds after the oil agent A was dropped onto the surface of the sample S in the cases of (I) as sintered, (II) fine processing, (III) intermediate processing, and (IV) rough processing corresponding to (I) to (IV) of FIG. 4. It can be seen from FIG. 14 that a rate of a change in the wet spreading area is small in the cases of (I) as sintered, (II) fine processing, and (III) intermediate processing, whereas a rate of a change is larger in the case of (IV) rough processing than in the cases of (I) to (III). In other words, while inclinations of broken lines of (I) to (III) are gentle, an inclination of a broken line of (IV) is steeper than the broken lines of (I) to (III).

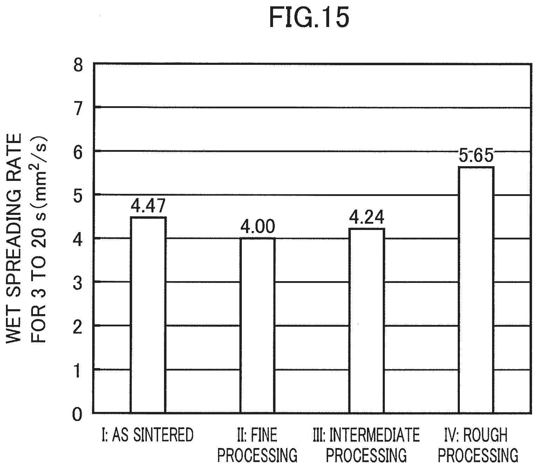

From the graph of FIG. 14, the wet spreading rates in the cases of (I) as sintered, (II) fine processing, (III) intermediate processing, and (IV) rough processing can be expressed as shown in FIG. 15. FIG. 15 is a bar graph showing wet spreading rates from 3 seconds after to 50 seconds after the oil agent was dropped onto the sample surface in the surface of the sample S in the cases of (I) as sintered, (II) fine processing, (III) intermediate processing, and (IV) rough processing corresponding to (I) to (IV) of FIG. 4.

It can be seen from the graph of FIG. 15 that while in the cases of (I) as sintered, (II) fine processing, and (III) intermediate processing, the wet spreading rate from 3 seconds after to 50 seconds after the dropping of the oil agent A is in a range of 4 to 4.5 mm²/second, in the case of (IV) rough processing, the wet spreading rate is 5.65 mm²/second, which is significantly higher than the other cases of (I) to (III). It can be seen from the result of FIG. 15 that the oil agent A is reliably prevented from leaking from the base of the tool 1 by providing a surface on which the wet spreading rate of the oil agent for 3 to 20 seconds is less than 5.65 mm²/second.

### (Regarding Other Parameters of Surface Roughness)

Parameters representing the surface roughness include a maximum peak height Rp and a maximum valley height Rv in addition to the arithmetic average roughness Ra. By optimizing the maximum peak height Rp and the maximum valley height Rv, it is conceivable to reliably prevent the oil agent A from leaking from the base of the tool 1.

Specifically, the surface roughness of at least one of the outer peripheral surface 112a of the pin base part 112 and the inner peripheral surface 122a of the shoulder base part 122 is preferably set to 6.9 or more and less than 29.2 in the maximum peak height Rp in addition to the setting of the arithmetic average roughness Ra. The above configuration enables the oil agent A to be reliably prevented from leaking from the base of the tool 1.

Furthermore, the surface roughness of at least one of the outer peripheral surface 112a of the pin base part 112 and the inner peripheral surface 122a of the shoulder base part 122 is preferably set to 5.4 or more and less than 22.5 in the maximum valley height Rv in addition to the setting of the arithmetic average roughness Ra. The above configuration enables the oil agent A to be reliably prevented from leaking from the base of the tool 1.

### [Second Embodiment]

In the first embodiment described above, in order to prevent the oil agent A from leaking from the base of the tool 1, focusing only on the surface roughness of at least one of the outer peripheral surface 112a of the pin base part 112 and the inner peripheral surface 122a of the shoulder base part 122, i.e., only on the surface roughness on the base side of the tool 1, the surface roughness is set in the range of more than 0.04 and less than 5.9 in the arithmetic average roughness Ra.

In the second embodiment, focusing on both a surface roughness on the base side and a surface roughness on the distal end side of the tool 1, a ratio between the surface roughness on the base side and the surface roughness on the distal end side of the tool 1 is optimized to prevent the oil agent A from leaking from the base of the tool 1.

Specifically, when a value expressing the surface roughness of at least one of the outer peripheral surface 112a of the pin base part 112 and the inner peripheral surface 122a of the shoulder base part 122 as the arithmetic average roughness Ra is defined as a base side surface roughness, and a value expressing the surface roughness of at least one of the outer peripheral surface 111a of the pin distal end part 111 and the inner peripheral surface 121a of the shoulder distal end part 121 as the arithmetic average roughness Ra is defined as a distal end side surface roughness, a surface roughness ratio, which is a value obtained by dividing the base side surface roughness by the distal end side surface roughness, is set within a range of more than 1 and 118 or less. By setting the base side surface roughness and the distal end side surface roughness within the above ranges, the oil agent A does not leak from the base of the tool 1 even in a state where the axis of the tool 1 is inclined from the vertical direction when the tool 1 is used for the welding work in a state where the gap C between the pin 11 and the shoulder 12 is filled with the oil agent A.

Here, for example, similarly to the first embodiment described above, the base side surface roughness is set to the range of more than 0.04 and less than 5.9 in the arithmetic average roughness Ra in order to prevent the oil agent A from leaking from the base of the tool 1. The distal end side surface roughness is set to be smaller than the above-described base side surface roughness in order to suppress adhesion of a separated matter from a welding material inside the distal end gap part C1. Specifically, the distal end side surface roughness is set within a range of 0.04 or more and 1.8 or less in the arithmetic average roughness Ra. Therefore, as described above, the surface roughness ratio, which is the value obtained by dividing the base side surface roughness by the distal end side surface roughness in the arithmetic average roughness Ra, is set in the range of more than 1 and 118 or less, whereby the oil agent A can be prevented from leaking from the base of the tool 1.

The width w2 of the base gap part C2 is, for example, set to the wide range of about 0.1 to 3.5 mm similarly to the first embodiment. Similarly to the first embodiment, the width w1 of the distal end gap part C1 is set to a narrow range of about 0.01 to 0.1 mm in order to suppress adhesion of the separated matter from the welding material. Therefore, a ratio of the width w2 of the base gap part C2 to the width w1 of the distal end gap part C1, i.e., w2/w1, is set to a range of 1 to 350, preferably 3 to 150, and more preferably 5 to 50.

Other configurations of the tool 1 of the second embodiment and the use method thereof are common to those of the tool 1 of the first embodiment and the use method thereof, and thus description thereof will be omitted.

### [Conclusion of Present Disclosure]

A friction stir spot welding tool according to a first mode of the present disclosure includes: a pin; and a shoulder having a hollow part into which the pin is inserted, the shoulder has a cylindrical shoulder distal end part and a cylindrical shoulder base part connected to an end on a base side of the shoulder distal end part, the shoulder distal end part and the shoulder base part forming the hollow part, the pin has a columnar pin distal end part to be inserted into the shoulder distal end part, and a columnar pin base part connected to an end on a base side of the pin distal end part and to be inserted into the shoulder base part, a gap is formed between an outer peripheral surface of the pin and an inner peripheral surface of the shoulder, and a base side surface roughness that is a value obtained by expressing a surface roughness of at least one of an outer peripheral surface of the pin base part and an inner peripheral surface of the shoulder base part as an arithmetic average roughness Ra is set in a range of more than 0.04 and less than 5.9.

According to the first mode, by setting the base side surface roughness in the above range, it is possible to prevent an oil agent from leaking from the base of the tool even in a state where the axis of the tool is inclined from the vertical direction when the tool is used for the welding work in a state where the gap between the pin and the shoulder is filled with the oil agent.

A friction stir spot welding tool according to a second mode of the present disclosure includes: a pin; and a shoulder having a hollow part into which the pin is inserted, the shoulder has a cylindrical shoulder distal end part and a cylindrical shoulder base part continuous with an end on a base side of the shoulder distal end part, the shoulder distal end part and the shoulder base part forming the hollow part, the pin has a columnar pin distal end part to be inserted into the shoulder distal end part, and a columnar pin base part connected to an end on a base side of the pin distal end part and to be inserted into the shoulder base part, a gap is formed between an outer peripheral surface of the pin and an inner peripheral surface of the shoulder, and in a case where a value obtained by expressing a surface roughness of at least one of an outer peripheral surface of the pin base part and an inner peripheral surface of the shoulder base part as an arithmetic average roughness Ra is defined as a base side surface roughness, and a value obtained by expressing a surface roughness of at least one of an outer peripheral surface of the pin distal end part and an inner peripheral surface of the shoulder distal end part as the arithmetic average roughness Ra is defined as a distal end side surface roughness, a surface roughness ratio that is a value obtained by dividing the base side surface roughness by the distal end side surface roughness is set in a range of more than 1 and 118 or less.

According to the second mode, by setting the base side surface roughness and the distal end side surface roughness within the above ranges, the oil agent does not leak from the base of the tool even in a state where the axis of the tool is inclined from the vertical direction when the tool is used for the welding work in a state where the gap between the pin and the shoulder is filled with the oil agent.

A friction stir spot welding tool according to a third mode of the present disclosure is the friction stir spot welding tool according to the first and second modes, in which the base side surface roughness is such a value that a wet-spreading rate of an oil agent for 3 to 20 seconds is less than 5.65 mm²/sec.

According to the third mode, it is possible to reliably prevent the oil agent from leaking from the base of the tool.

A friction stir spot welding tool according to a fourth mode of the present disclosure is the friction stir spot welding tool according to the first to third modes, in which the base side surface roughness is such a value that is 6.9 or more and less than 29.2 in a maximum peak height Rp.

According to the fourth mode, it is possible to reliably prevent the oil agent from leaking from the base of the tool.

A friction stir spot welding tool according to a fifth mode of the present disclosure is the friction stir spot welding tool according to the first to fourth modes, in which the base side surface roughness is such a value that is 5.4 or more and less than 22.5 in a maximum valley height Rv.

According to the fifth mode, it is possible to reliably prevent the oil agent from leaking from the base of the tool.

A friction stir spot welding tool according to a sixth mode of the present disclosure is the friction stir spot welding tool according to the first to fifth modes, in which the pin is relatively movable in an axial direction with respect to the shoulder within a range in which an axial length of a base gap part formed by the outer peripheral surface of the pin base part and the inner peripheral surface of the shoulder base part in the gap is 27 mm or more.

According to the sixth mode, it is possible to reliably prevent the oil agent from leaking from the base of the tool.

A friction stir spot welding tool according to a seventh mode of the present disclosure is the friction stir spot welding tool according to the first to sixth modes, in which at least one of the outer peripheral surface of the pin base part and the inner peripheral surface of the shoulder base part is formed of a sintered surface of cemented carbide such that the base side surface roughness falls within a range of more than 0.04 and less than 5.9.

According to the seventh mode, at least one of the outer peripheral surface of the pin base part and the inner peripheral surface of the shoulder base part is formed of a sintered surface of cemented carbide such that the base side surface roughness falls within a range of more than 0.04 and less than 5.9, whereby the inner peripheral surface has a predetermined dimension and a predetermined base side surface roughness. Therefore, leakage can be prevented without performing finish processing for achieving a predetermined base side surface roughness.

A method for using a friction stir spot welding tool according to an eighth mode of the present disclosure is a method, in the method for using the friction stir spot welding tool according to the first to seventh modes, including: filling a gap between the outer peripheral surface of the pin and the inner peripheral surface of the shoulder with an oil agent; directing a distal end of the tool toward a welding target to be subjected to friction stir spot welding while inclining an axis of the tool from a vertical direction; and performing the friction stir spot welding of the welding target.

According to the eighth mode, in a case of performing the friction stir spot welding using the tools according to the first to seventh modes, the gap between the outer peripheral surface of the pin and the inner peripheral surface of the shoulder is filled with an oil agent, the distal end of the tool is directed to the welding target while the tool is inclined from the vertical direction, and the friction stir spot welding of the welding target is performed. Thus, even when the friction stir spot welding is performed with the distal end of the tool directed in the direction inclined from the vertical direction, since the tool of the present disclosure has the above-described base side surface roughness, it is possible to prevent the oil agent from leaking from the base of the tool.

A method for using a friction stir spot welding tool according to a ninth mode of the present disclosure is a method, in the method for using a friction stir spot welding tool according to the eighth mode, in which the oil agent is filled in the gap in a volume of 70% or less of a volume of the gap in the entire tool.

According to the ninth mode, by filling the gap with the oil agent within the above range of volume, it is possible to reliably prevent the oil agent from leaking from the base of the tool.

### Description for reference signs

- 1: tool
- 11: pin
- 12: shoulder
- 12B: hollow part
- 111: pin distal end part
- 112: pin base part
- 112a: outer peripheral surface
- 121: shoulder distal end part
- 122: shoulder base part
- 122a: inner peripheral surface
- A: oil agent
- C: gap
- C1: distal end gap part
- C2: base gap part

## Claims

1. A friction stir spot welding tool comprising:
a pin; and
a shoulder having a hollow part into which the pin is inserted,
wherein
the shoulder has a cylindrical shoulder distal end part and a cylindrical shoulder base part connected to an end on a base side of the shoulder distal end part, the shoulder distal end part and the shoulder base part forming the hollow part,
the pin has a columnar pin distal end part to be inserted into the shoulder distal end part, and a columnar pin base part connected to an end on a base side of the pin distal end part and to be inserted into the shoulder base part,
a gap is formed between an outer peripheral surface of the pin and an inner peripheral surface of the shoulder, and
a base side surface roughness that is a value obtained by expressing a surface roughness of at least one of an outer peripheral surface of the pin base part and an inner peripheral surface of the shoulder base part as an arithmetic average roughness Ra is set in a range of more than 0.04 and less than 5.9.

2. A friction stir spot welding tool comprising:
a pin; and
a shoulder having a hollow part into which the pin is inserted,
wherein
the shoulder has a cylindrical shoulder distal end part and a cylindrical shoulder base part continuous with an end on a base side of the shoulder distal end part, the shoulder distal end part and the shoulder base part forming the hollow part,
the pin has a columnar pin distal end part to be inserted into the shoulder distal end part, and a columnar pin base part connected to an end on a base side of the pin distal end part and to be inserted into the shoulder base part,
a gap is formed between an outer peripheral surface of the pin and an inner peripheral surface of the shoulder, and
in a case where a value obtained by expressing a surface roughness of at least one of an outer peripheral surface of the pin base part and an inner peripheral surface of the shoulder base part as an arithmetic average roughness Ra is defined as a base side surface roughness, and a value obtained by expressing a surface roughness of at least one of an outer peripheral surface of the pin distal end part and an inner peripheral surface of the shoulder distal end part as the arithmetic average roughness Ra is defined as a distal end side surface roughness, a surface roughness ratio that is a value obtained by dividing the base side surface roughness by the distal end side surface roughness is set in a range of more than 1 and 118 or less.

3. The friction stir spot welding tool according to claim 1 or 2, wherein the base side surface roughness is such a value that a wet-spreading rate of an oil agent for 3 to 20 seconds is less than 5.65 mm²/sec.

4. The firiction stir spot welding tool according to claim 1 or 2, wherein the base side surface roughness is such a value that is 6.9 or more and less than 29.2 in a maximum peak height Rp.

5. The friction stir spot welding tool according to claim 1 or 2, wherein the base side surface roughness is such a value that is 5.4 or more and less than 22.5 in a maximum valley height Rv.

6. The friction stir spot welding tool according to claim 1 or 2, wherein the pin is relatively movable in an axial direction with respect to the shoulder within a range in which an axial length of a base gap part formed by the outer peripheral surface of the pin base part and the inner peripheral surface of the shoulder base part in the gap is 27 mm or more.

7. The friction stir spot welding tool according to claim 1 or 2, wherein at least one of the outer peripheral surface of the pin base part and the inner peripheral surface of the shoulder base part is formed of a sintered surface of cemented carbide such that the base side surface roughness falls within a range of more than 0.04 and less than 5.9.

8. A method for using the friction stir spot welding tool according to claim 1 or 2, the method comprising:
filling a gap between the outer peripheral surface of the pin and the inner peripheral surface of the shoulder with an oil agent;
directing a distal end of the tool toward a welding target to be subjected to friction stir spot welding while inclining an axis of the tool from a vertical direction; and
performing the friction stir spot welding of the welding target.

9. The method for using the friction stir spot welding tool according to claim 8, wherein the oil agent is filled in the gap in a volume of 70% or less of a volume of the gap in the entire tool.
